# EUROPEAN PATENT APPLICATION

(11) **EP 3 992 224 A1**
(43) Date of publication of application: **04.05.2022**
(21) Application number: 20832665.2
(22) Date of filing: 26.06.2020
(51) Int. Cl.: C08G 18/81, C08G 18/38, C08G 18/76, C08G 75/045, G02B 1/04, G02C 7/02

(54) **POLYMERIZABLE COMPOSITION FOR OPTICAL MATERIALS, OPTICAL MATERIAL, AND METHOD FOR PRODUCING OPTICAL MATERIAL**

(30) Priority: 28.06.2019 JP 2019120666
(71) Applicant: Hoya Lens Thailand Ltd., Pathumthani 12130 (TH)
(72) Inventor: IGARI, Masahito, Tokyo 160-8347 (JP); NAGASAWA, Takumi, Tokyo 160-8347 (JP); YAMASHITA, Teruo, Tokyo 160-8347 (JP); WATANABE, Tsuyoshi, Tokyo 160-8347 (JP)
(74) Representative: Gerauer, Marc Philippé
(86) International application number: PCT/JP2020/025362
(87) International publication number: WO 2020/262659

(57) **Abstract**

Provided is a polymerizable composition for an optical material containing an aromatic iso(thio)cyanate compound, a non-aromatic iso(thio)cyanate compound having an unsaturated aliphatic ring, and a polythiol compound.

## Description

### Technical Field

The present invention relates to a polymerizable composition for an optical material, an optical material, and a method for producing an optical material.

### Background Art

A cured product obtained by curing a polymerizable composition containing an iso(thio)cyanate compound and a polythiol compound is widely used as various optical materials such as lenses.

### Citation List

### Patent Literature

Patent Literature 1: WO 2015/163313 A

### Summary of Invention

### Technical Problem

One of the physical properties desired for the optical material is excellent heat resistance. This is due to the following reason, for example. The optical material is used, for example, as a substrate for various optical products. The optical products are usually produced by forming one or more functional films (for example, a hard coat, an antireflection film, and the like) on the optical material (substrate). The functional film is formed by various film forming methods, and many film forming methods involve a heat treatment. When an optical material which is a substrate has poor heat resistance, the quality of an optical product may be deteriorated due to deformation and/or deterioration of the substrate by the heat treatment. For example, when the substrate is deformed, a functional film formed on the substrate cannot follow the deformation of the substrate and a crack may be generated in the functional film. Meanwhile, when the substrate is to be heated at a heating temperature at which the substrate can withstand in order to prevent such deterioration in quality, film forming conditions are restricted, and usable film forming materials are also limited.

One aspect of the present invention provides a polymerizable composition for an optical material that contains an iso(thio)cyanate compound and a polythiol compound and can be used for producing an optical material having excellent heat resistance.

### Solution to Problem

One aspect of the present invention relates to a polymerizable composition for an optical material (hereinafter, also simply referred to as a "polymerizable composition") containing an aromatic iso(thio)cyanate compound, a non-aromatic iso(thio)cyanate compound having an unsaturated aliphatic ring, and a polythiol compound.

The polymerizable composition contains, as iso(thio)cyanate compounds, an aromatic iso(thio)cyanate compound and a non-aromatic iso(thio)cyanate compound having an unsaturated aliphatic ring. The optical material formed of such a composition can have excellent heat resistance.

### Advantageous Effects of Invention

According to one aspect of the present invention, it is possible to provide an optical material obtained by curing a polymerizable composition containing an iso(thio)cyanate compound and a polythiol compound, in which the optical material has excellent heat resistance.

### Description of Embodiments

### [Polymerizable composition for optical material]

The polymerizable composition contains the iso(thio)cyanate compound and the polythiol compound.

In the present invention and the present specification, the "iso(thio)cyanate compound" refers to a compound having one or more iso(thio)cyanate groups per molecule. The functional number of the iso(thio)cyanate compound is the number of iso(thio)cyanate groups included in one molecule. The "iso(thio)cyanate" means one or both of isocyanate and isothiocyanate. The isocyanate may be referred to as isocyanate, and isothiocyanate may be referred to as isothiocyanate. In addition, the "aromatic iso(thio)cyanate compound" refers to a compound having one or more iso(thio)cyanate groups directly bonded to an aromatic ring per molecule. The "non-aromatic iso(thio)cyanate compound" refers to an iso(thio)cyanate compound that does not correspond to an aromatic iso(thio)cyanate compound. The "unsaturated aliphatic ring" refers to an aliphatic ring containing one or more unsaturated bonds in the ring.

In the present invention and the present specification, the "polythiol compound" refers to a compound having two or more thiol groups per molecule. The functional number of the polythiol compound is the number of thiol groups included in one molecule. Various compounds that can be used as components of a polymerizable composition such as a polythiol compound have two or more isomers, and in these compounds, a mixture of two or more isomers may be used, or one of two or more isomers may be used alone.

The compound will be further described in detail below.

### <Aromatic iso(thio)cyanate compound>

The aromatic iso(thio)cyanate compound is a mono- or higher functional iso(thio)cyanate compound, and as for the functional number thereof, the aromatic iso(thio)cyanate compound is preferably a bi- or higher functional aromatic iso(thio)cyanate compound, more preferably a bifunctional to tetrafunctional aromatic iso(thio)cyanate compound, and still more preferably a bifunctional or trifunctional aromatic iso(thio)cyanate compound. In addition, the number of iso(thio)cyanate groups directly bonded to an aromatic ring per one molecule in the aromatic iso(thio)cyanate compound is preferably two or more, more preferably two to four, and still more preferably two or three. The aromatic iso(thio)cyanate compound may be a monocyclic compound or a heterocyclic compound. The monocyclic compound can be a carbocyclic compound, and the heterocyclic compound can have, as atoms constituting the cyclic structure, one or more heteroatoms such as an oxygen atom, a nitrogen atom, and a sulfur atom together with a carbon atom. In addition, the aromatic iso(thio)cyanate compound may be a monocyclic compound, a bicyclic or higher polycyclic compound, or a compound having a structure in which a plurality of cyclic structures are linked by a linking group.

Specific examples of the aromatic iso(thio)cyanate compound can include tolylene diisocyanate, diphenylmethane diisocyanate, and naphthalene diisocyanate. Furthermore, a halogen substitution product of the aromatic iso(thio)cyanate compound such as a chlorine substitution product thereof or a bromine substitution product thereof, an alkyl substitution product thereof, an alkoxy substitution product thereof, a prepolymer type modified product thereof with a nitro substitution product or a polyhydric alcohol, a carbodiimide modified product thereof, a urea modified product thereof, a biuret modified product thereof, a dimerization or trimerization reaction product thereof, and the like can be used. As the aromatic iso(thio)cyanate compound, one aromatic iso(thio)cyanate compound may be used alone, or two or more aromatic iso(thio)cyanate compounds may be mixed to be used.

A content of the aromatic iso(thio)cyanate compound in the polymerizable composition can be, for example, more than 0 mass% and 50.00 mass% or less, and preferably 15.00 to 35.00 mass%, with respect to the mass (100 mass%) of the polymerizable composition. In the present invention and the present specification, in a case where the polymerizable composition contains a solvent, the mass of the polymerizable composition refers to the mass excluding the solvent.

### <Non-aromatic iso(thio)cyanate compound>

The polymerizable composition contains, as iso(thio)cyanate compounds, one or more aromatic iso(thio)cyanate compounds and one or more non-aromatic iso(thio)cyanate compounds. The non-aromatic iso(thio)cyanate compound has an unsaturated aliphatic ring. The unsaturated aliphatic ring can be a monocyclic aliphatic ring or a heterocyclic aliphatic ring, the monocyclic aliphatic ring can be an aliphatic carbocyclic ring, and the heterocyclic aliphatic ring can have, as atoms constituting the cyclic structure, one or more heteroatoms such as an oxygen atom, a nitrogen atom, and a sulfur atom together with a carbon atom. In addition, the unsaturated aliphatic ring may be a monocyclic aliphatic ring or a bicyclic or higher polycyclic aliphatic ring, and in one aspect, the unsaturated aliphatic ring is preferably a bicyclic aliphatic ring. In addition, the non-aromatic iso(thio)cyanate compound can have one or two or more unsaturated aliphatic rings per molecule. In one aspect, the number of unsaturated aliphatic rings included in the non-aromatic iso(thio)cyanate compound is preferably one per molecule. The present inventors presume that a structure formed by reacting an unsaturated bond contained in the unsaturated aliphatic ring with a thiol group included in a polythiol compound contributes to improvement in heat resistance of the optical material obtained by curing the polymerizable composition.

The number of unsaturated bonds contained in the unsaturated aliphatic ring is one or more, preferably one to three, more preferably one or two, and still more preferably one. The unsaturated bonds contained in the unsaturated aliphatic ring can be a carbon-carbon double bond. A specific example of the unsaturated aliphatic ring can include a norbornene ring.

The non-aromatic iso(thio)cyanate compound is a mono- or higher functional iso(thio)cyanate compound, and as for the functional number thereof, the non-aromatic iso(thio)cyanate compound is preferably a monofunctional, bifunctional, or trifunctional non-aromatic iso(thio)cyanate compound, more preferably a monofunctional or bifunctional non-aromatic iso(thio)cyanate compound, and still more preferably a monofunctional non-aromatic iso(thio)cyanate compound.

As one aspect of the non-aromatic iso(thio)cyanate compound, a compound represented by the following General Formula 1 can be exemplified.

[Chem. 1]

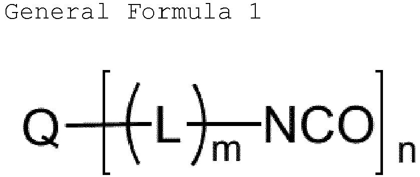

In General Formula 1, Q represents an n-valent unsaturated aliphatic ring group, L represents a divalent linking group, m is 0 or 1, and n is a functional number of the non-aromatic iso(thio)cyanate compound.

In General Formula 1, as for details of the n-valent unsaturated aliphatic ring group represented by Q, the above description related to the unsaturated aliphatic ring can be referred to. The n-valent unsaturated aliphatic ring group represented by Q is preferably an n-valent norbornene group.

In General Formula 1, the divalent linking group represented by L can be, for example, an alkylene group, and is preferably an alkylene group having 1 to 6 carbon atoms, more preferably an alkylene group having 1 to 4 carbon atoms, still more preferably an alkylene group having 1 or 2 carbon atoms, and further still more preferably a methylene group. The alkylene group may be unsubstituted, may have a substituent, and is preferably unsubstituted. In a case where the alkylene group has a substituent, examples of the substituent can include an alkyl group (for example, an alkyl group having 1 to 6 carbon atoms), a hydroxy group, an alkoxy group (for example, an alkoxy group having 1 to 6 carbon atoms), a halogen atom (for example, a fluorine atom, a chlorine atom, a bromine atom, or the like), a cyano group, an amino group, a nitro group, an acyl group, a carboxy group, a salt of a carboxy group, a sulfonic acid group, and a salt of a sulfonic acid group. In addition, in the present invention and the present specification, unless otherwise specified, the group described above may have a substituent and may be unsubstituted. In addition, the "number of carbon atoms" in the group having a substituent refers to the number of carbon atoms not including the number of carbon atoms of the substituent, unless otherwise specified.

In General Formula 1, m is 0 or 1, and n is a functional number of the non-aromatic iso(thio)cyanate compound. n is preferably 1, 2, or 3, more preferably 1 or 2, and still more preferably 1.

Specific examples of the compound represented by General Formula 1 can include 5-(isocyanatomethyl)bicyclo[2.2.1]hept-2-ene and 5,6-bis(isocyanatomethyl)bicyclo[2.2.1]hept-2-ene. The 5-(isocyanatomethyl)bicyclo[2.2.1]hept-2-ene is a compound having the following structure, and may be referred to as bicyclo[2.2.1]hept-2-en-5-methyl isocyanate or 5-isocyanatomethyl-2-norbornene.

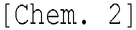

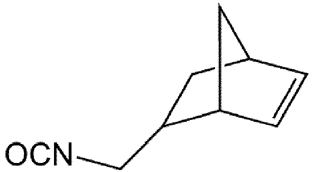

A content of the non-aromatic iso(thio)cyanate compound in the polymerizable composition can be, for example, more than 0 mass% and 50.00 mass% or less, and preferably 15.00 to 35.00 mass%, with respect to the mass (100 mass%) of the polymerizable composition.

### <Polythiol compound>

The polymerizable compound contains the iso(thio)cyanate compound and one or more polythiol compounds. The polythiol compound may be an aliphatic compound or an aromatic compound. In addition, in a case where the polythiol compound is a compound having a cyclic structure, the cyclic structure can be a monocyclic ring or an aliphatic heterocyclic ring, the monocyclic ring can be a carbon ring, and the heterocyclic ring can have, as atoms constituting the cyclic structure, one or more heteroatoms such as an oxygen atom, a nitrogen atom, and a sulfur atom together with a carbon atom. The number of thiol groups included in the polythiol compound is two or more, and preferably two to four per molecule. In addition, the number of thiol groups included in the polythiol compound is preferably three or more per molecule.

Examples of the polythiol compound include aliphatic polythiol compounds such as methanedithiol, 1,2-ethanedithiol, 1,1-propanedithiol, 1,2-propanedithiol, 1,3-propanedithiol, 2,2-propanedithiol, 1,6-hexanedithiol, 1,2,3-propanetrithiol, tetrakis(mercaptomethyl)methane, 1,1-cyclohexanedithiol, 1,2-cyclohexanedithiol, 2,2-dimethylpropane-1,3-dithiol, 3,4-dimethoxybutane-1,2-dithiol, 2-methylcyclohexane-2,3-dithiol, 1,1-bis(mercaptomethyl)cyclohexane, thiomalic acid bis(2-mercaptoethyl ester), 2,3-dimercaptosuccinic acid (2-mercaptoethyl ester), 2,3-dimercapto-1-propanol (2-mercaptoacetate), 2,3-dimercapto-1-propanol (3-mercaptoacetate), diethylene glycol bis(2-mercaptoacetate), diethylene glycol bis(3-mercaptopropionate), 1,2-dimercaptopropyl methyl ether, 2,3-dimercaptopropyl methyl ether, 2,2-bis(mercaptomethyl)-1,3-propanedithiol, bis(2-mercaptoethyl) ether, ethylene glycol bis(2-mercaptoacetate), ethylene glycol bis(3-mercaptopropionate), trimethylolpropane tris(2-mercaptoacetate), trimethylolpropane tris(3-mercaptopropionate), pentaerythritol tetrakis(2-mercaptoacetate), pentaerythritol tetrakis(3-mercaptopropionate), and 1,2-bis(2-mercaptoethylthio)-3-mercaptopropane; aromatic polythiol compounds such as 1,2-dimercaptobenzene, 1,3-dimercaptobenzene, 1,4-dimercaptobenzene, 1,2-bis(mercaptomethyl)benzene, 1,3-bis(mercaptomethyl)benzene, 1,4-bis(mercaptomethyl)benzene, 1,3-bis(mercaptoethyl)benzene, 1,4-bis(mercaptoethyl)benzene, 1,2-bis(mercaptomethoxy)benzene, 1,3-bis(mercaptomethoxy)benzene, 1,4-bis(mercaptomethoxy)benzene, 1,2-bis(mercaptoethoxy)benzene, 1,3-bis(mercaptoethoxy)benzene, 1,4-bis(mercaptoethoxy)benzene, 1,2,3-trimercaptobenzene, 1,2,4-trimercaptobenzene, 1,3,5-trimercaptobenzene, 1,2,3-tris(mercaptomethyl)benzene, 1,2,4-tris(mercaptomethyl)benzene, 1,3,5-tris(mercaptomethyl)benzene, 1,2,3-tris(mercaptoethyl)benzene, 1,2,4-tris(mercaptoethyl)benzene, 1,3,5-tris(mercaptoethyl)benzene, 1,2,3-tris(mercaptomethoxy)benzene, 1,2,4-tris(mercaptomethoxy)benzene, 1,3,5-tris(mercaptomethoxy)benzene, 1,2,3-tris(mercaptoethoxy)benzene, 1,2,4-tris(mercaptoethoxy)benzene, 1,3,5-tris(mercaptoethoxy)benzene, 1,2,3,4-tetramercaptobenzene, 1,2,3,5-tetramercaptobenzene, 1,2,4,5-tetramercaptobenzene, 1,2,3,4-tetrakis(mercaptomethyl)benzene, 1,2,3,5-tetrakis(mercaptomethyl)benzene, 1,2,4,5-tetrakis(mercaptomethyl)benzene, 1,2,3,4-tetrakis(mercaptoethyl)benzene, 1,2,3,5-tetrakis(mercaptoethyl)benzene, 1,2,4,5-tetrakis(mercaptoethyl)benzene, 1,2,3,4-tetrakis(mercaptoethyl)benzene, 1,2,3,5-tetrakis(mercaptomethoxy)benzene, 1,2,4,5-tetrakis(mercaptomethoxy)benzene, 1,2,3,4-tetrakis(mercaptoethoxy)benzene, 1,2,3,5-tetrakis(mercaptoethoxy)benzene, 1,2,4,5-tetrakis(mercaptoethoxy)benzene, 2,2'-dimercaptobiphenyl, 4,4'-dimercaptobiphenyl, 4,4'-dimercaptobibenzyl, 2,5-toluenedithiol, 3,4-toluenedithiol, 1,4-naphthalenedithiol, 1,5-naphthalenedithiol, 2,6-naphthalenedithiol, 2,7-naphthalenedithiol, 2,4-dimethylbenzene-1,3-dithiol, 4,5-dimethylbenzene-1,3-dithiol, 9,10-anthracene dimethanethiol, 1,3-di(p-methoxyphenyl)propane-2,2-dithiol, 1,3-diphenylpropane-2,2-dithiol, phenylmethane-1,1-dithiol, and 2,4-di(p-mercaptophenyl)pentane; halogen-substituted aromatic polythiol compounds such as a chlorine substitution product and a bromine substitution product such as 2,5-dichlorobenzene-1,3-dithiol, 1,3-di(p-chlorophenyl)propane-2,2-dithiol, 3,4,5-tribromo-1,2-dimercaptobenzene, and 2,3,4,6-tetrachloro-1,5-bis(mercaptomethyl)benzene; aromatic polythiol compounds containing a sulfur atom in addition to a mercapto group such as 1,2-bis(mercaptomethylthio)benzene, 1,3-bis(mercaptomethylthio)benzene, 1,4-bis(mercaptomethylthio)benzene, 1,2-bis(mercaptoethylthio)benzene, 1,3-bis(mercaptoethylthio)benzene, 1,4-bis(mercaptoethylthio)benzene, 1,2,3-tris(mercaptomethylthio)benzene, 1,2,4-tris(mercaptomethylthio)benzene, 1,3,5-tris(mercaptomethylthio)benzene, 1,2,3-tris(mercaptoethylthio)benzene, 1,2,4-tris(mercaptoethylthio)benzene, 1,3,5-tris(mercaptoethylthio)benzene, 1,2,3,4-tetrakis(mercaptomethylthio)benzene, 1,2,3,5-tetrakis(mercaptomethylthio)benzene, 1,2,4,5-tetrakis(mercaptomethylthio)benzene, 1,2,3,4-tetrakis(mercaptoethylthio)benzene, 1,2,3,5-tetrakis(mercaptoethylthio)benzene, 1,2,4,5-tetrakis(mercaptoethylthio)benzene, and nuclear alkylated product thereof; aliphatic polythiol compounds containing a sulfur atom in addition to a thiol group such as bis(mercaptomethyl)sulfide, bis(mercaptoethyl)sulfide, bis(mercaptopropyl)sulfide, bis(mercaptomethylthio)methane, bis(2-mercaptoethylthio)methane, bis(3-mercaptopropylthio)methane, 1,2-bis(mercaptomethylthio)ethane, 1,2-bis(2-mercaptoethylthio)ethane, 1,2-bis(3-mercaptopropylthio)ethane, 1,3-bis(mercaptomethylthio)propane, 1,3-bis(2-mercaptoethylthio)propane, 1,3-bis(3-mercaptopropylthio)propane, 1,2-bis(2-mercaptoethylthio)-3-mercaptopropane, 2-mercaptoethylthio-1,3-propanedithiol, 1,2,3-tris(mercaptomethylthio)propane, 1,2,3-tris(2-mercaptoethylthio)propane, 1,2,3-tris(3-mercaptopropylthio)propane, tetrakis(mercaptomethylthiomethyl)methane, tetrakis(2-mercaptoethylthiomethyl)methane, tetrakis(3-mercaptopropylthiomethyl)methane, bis(2,3-dimercaptopropyl)sulfide, 2,5-dimercapto-1,4-dithiane, bis(mercaptomethyl)disulfide, bis(mercaptoethyl)disulfide, bis(mercaptopropyl)disulfide, and esters of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxypropyl sulfide bis(2-mercaptoacetate), hydroxypropyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropionate), hydroxypropyl disulfide bis(2-mercaptoacetate), hydroxypropyl disulfide bis(3-mercaptopropionate), 2-mercaptoethyl ether bis(2-mercaptoacetate), 2-mercaptoethyl ether bis(3-mercaptopropionate), 1,4-dithiane-2,5-diol bis(2-mercaptoacetate), 1,4-dithiane-2,5-diol bis(3-mercaptopropionate), thioglycolic acid (2-mercaptoethyl ester), thiodipropionic acid bis(2-mercaptoethyl ester), 4,4'-thiodibutyric acid bis(2-mercaptoethyl ester), dithiodiglycolic acid bis(2-mercaptoethyl ester), dithiodipropionic acid bis(2-mercaptoethyl ester), 4,4'-dithiodibutyric acid bis(2-mercaptoethyl ester), thiodiglycolic acid bis(2,3-dimercaptopropyl ester), thiodipropionic acid bis(2,3-dimercaptopropyl ester), dithiodiglycolic acid bis(2,3-dimercaptopropyl ester), dithiodipropionic acid bis(2,3-dimercaptopropyl ester), 4-mercaptomethyl-1,8-dimercapto-3,6-dithiaoctane (also referred to as 4-mercaptomethyl-3,6-dithiaoctan-1,8-dithiol), bis(1,3-dimercapto-2-propyl) sulfide, bis(mercaptomethyl)-3,6,9-trithiaundecane-1,11-dithiol (one of the isomers selected from the group consisting of 4,7-bis(mercaptomethyl)-3,6,9-trithiaundecane-1,11-dithiol, 4,8-bis(mercaptomethyl)-3,6,9-trithiaundecane-1,11-dithiol, and 5,7-bis(mercaptomethyl)-3,6,9-trithiaundecane-1,11-dithiol, or a mixture of two or three of these isomers); and heterocyclic compounds containing a sulfur atom in addition to a mercapto group such as 3,4-thiophenedithiol, tetrahydrothiophene-2,5-dimercaptomethyl, 2,5-dimercapto-1,3,4-thiadiazole, 2,5-dimercapto-1,4-dithiane, and 2,5-dimercaptomethyl-1,4-dithiane.

A content of the polythiol compound in the polymerizable composition can be, for example, 20.00 to 80.00 mass%, preferably 30.00 to 70.00 mass%, and more preferably 40.00 to 60.00 mass%, with respect to the mass (100 mass%) of the polymerizable composition.

### <Other components>

The polymerizable composition contains the iso(thio)cyanate compound and the polythiol compound. The iso(thio)cyanate compound and the polythiol compound are components (polymerizable components) that can contribute to a reaction for polymerization. The reaction for polymerization can be a reaction between a thiol group included in a polythiol compound and an unsaturated bond contained in an unsaturated aliphatic ring of the non-aromatic iso(thio)cyanate compound (for example, a thiol-ene reaction between a thiol group and a carbon-carbon double bond); and a reaction between a thiol group included in a polythiol compound and iso(thio)cyanate included in the aromatic iso(thio)cyanate compound or the non-aromatic iso(thio)cyanate compound (thiourethanization reaction). In addition, the polymerizable composition may or may not contain one or more other polymerizable components together with the polymerizable component. Examples of the other polymerizable components can include one or more compounds (polyol compounds) having two or more hydroxy groups per molecule. The polyol compound can form a urethane bond by reacting a hydroxy group included in the compound with an iso(thio)cyanate group of any of the iso(thio)cyanate compounds (urethanization reaction). Examples of the polyol compound can include ethylene glycol, 1,3-propanediol, 1,4-butanediol, 1,5-pentanediol, 1,6-hexanediol, diethylene glycol, propylene glycol, dipropylene glycol, triethylene glycol, butylene glycol, glycerin, trimethylolethane, trimethylolpropane, pentaerythritol, sorbitol, erythritol, xylitol, mannitol, polycaprolactone diol, polyethylene glycol, bisphenol A, bisphenol F, bisphenol A-bis(2-hydroxyethyl ether), tetrabromobisphenol A, tetrabromophenol A-bis(2-hydroxyethyl ether), and pyrogallol. When the polymerizable composition contains one or more polyol compounds, a content of the polyol compound can be, for example, more than 0 mass% and 30.00 mass% or less, and preferably 10.00 to 20.00 mass%, with respect to the mass (100 mass%) of the polymerizable composition.

The polymerizable composition can optionally contain one or more known components such as an additive and a catalyst, that are generally used for producing an optical material. Examples of the additives can include various additives such as an ultraviolet absorber, an antioxidant, and a release agent. In addition, an organic phosphorus compound such as a phosphine derivative can also be used as an additive. The amount of the additive used can be appropriately set.

As the catalyst, it is preferable to use a catalyst that catalyzes a reaction between a thiol group and an unsaturated bond (for example, a thiol-ene reaction between a thiol group and a carbon-carbon double bond) (hereinafter, described as a "first catalyst") and a catalyst that catalyzes a reaction between a thiol group and iso(thio)cyanate (thiourethanization reaction) (hereinafter, described as a "second catalyst"). The catalyst that catalyzes a thiourethanization reaction may usually also be a catalyst that catalyzes a urethanization reaction between a hydroxy group of a polyol compound and an iso(thio)cyanate group of an iso(thio)cyanate compound.

Examples of the first catalyst that catalyzes a reaction between a thiol group and an unsaturated bond can include azobis compounds such as 2,2'-azobisisobutyronitrile, 2,2'-azobis(2-methylbutyronitrile), 2,2'-azobis-2,4-dimethylvaleronitrile, dimethyl-2,2'-azobisisoobtylate, 1,1'-azobis(cyclohexane-1-carbonitrile), 1,1'-azobis(1-acetoxyl-phenylethane), and 2,2'-azobis(4-methoxy-2,4-dimethylvaleronitrile); and peroxide compounds such as benzoyl peroxide, acetyl peroxide, tert-butyl peroxide, propionyl peroxide, lauroyl peroxide, tert-butyl peracetate, tert-butyl perbenzoate, tert-butyl hydroperoxide, tert-butyl peroxypivalate, 1,1-bis(t-butylperoxy)-3,3,5-trimethylcyclohexane, t-butylperoxy-2-ethylhexanoate, t-amylperoxy-2-ethylhexanoate, t-amylperisononanoate, t-amylperoxyacetate, and t-amylperoxybenzoate. The polymerizable composition can contain, for example, a first catalyst in an amount of 0.01 to 0.50 mass% with respect to the mass (100 mass%) of the polymerizable composition.

Examples of the second catalyst that catalyzes a thiourethanization reaction can include organotin compounds such as dibutyltin diacetate, dibutyltin dilaurate, dibutyltin dichloride, dimethyltin dichloride, monomethyltin trichloride, trimethyltin chloride, tributyltin chloride, tributyltin fluoride, and dimethyltin dibromide. The polymerizable composition can contain, for example, a second catalyst in an amount of 0.01 to 0.50 mass% with respect to the mass (100 mass%) of the polymerizable composition.

In addition, the polymerizable composition may be prepared without adding a solvent or may be prepared by adding an arbitrary amount of a solvent. As the solvent, it is possible to use one or more known solvents that can be used in the polymerizable composition in an arbitrary amount.

The polymerizable composition can be prepared by simultaneously or sequentially mixing the above-described various components at the same time or in an arbitrary order. A process of preparing the polymerizable compound can preferably include a first mixing step of mixing a polythiol compound and the non-aromatic iso(thio)cyanate compound with each other in the presence of a first catalyst, and a second mixing step of mixing the aromatic iso(thio)cyanate compound with a mixture obtained in the first mixing step in the presence of a second catalyst. The second mixing step can be preferably a process of mixing the aromatic iso(thio)cyanate compound with one or more poly(thi)ol compounds selected from the group consisting of the same polythiol compounds as the polythiol compound mixed in the first mixing step, a different polythiol compound from the polythiol compound mixed in the first mixing step, and a polyol compound in the presence of the second catalyst. In the present invention and the present specification, the "poly(thi)ol compound" refers to one or both of a polythiol compound and a polyol compound.

In the first mixing step, the mixture can be preferably heated. The heating is preferably performed at a heating temperature of 40 to 100°C for 0.5 to 2.0 hours. The heating temperature refers to a temperature of the mixture in a container in which mixing is performed. It is considered that the first mixing step is performed, and preferably, a first mixing step including heating is performed, such that the thiol group of the polythiol compound and the unsaturated bond contained in the unsaturated aliphatic ring of the non-aromatic iso(thio)cyanate compound can be preliminarily reacted with each other. Such a preliminary reaction is preferably performed from the viewpoint of improving the optical quality of the cured product (optical material) obtained by curing the polymerizable composition.

The second mixing step is preferably performed, for example, in a container disposed in an environment of a room temperature atmosphere, by decompressing the inside of the container. The pressure in the container in which the second mixing step is performed is preferably 1,000 Pa or less, more preferably 800 Pa or less, and still more preferably 700 Pa or less, but is preferably 10 Pa or more, more preferably 50 Pa or more, and still more preferably 100 Pa or more, from the viewpoint of working efficiency. The mixing in the decompressed container is preferably performed for 10 to 60 minutes. The polymerizable composition obtained as described above is subjected to a curing treatment as it is or after optionally performing one or more processes such as filter filtration. The "polymerizable composition" in the present invention and the present specification encompasses, for example, a composition in which a part of a reactive group included in a polymerizable component is included in a form after the reaction by performing the preliminary reaction described above.

### [Optical material and method for producing optical material]

One aspect of the present invention relates to an optical material that is a cured product obtained by curing a polymerizable composition for an optical material.

In addition, one aspect of the present invention relates to a method for producing an optical material, the method including curing the polymerizable composition by a curing treatment.

All the iso(thio)cyanate compound and the polythiol compound described above are polymerizable components, and by polymerizing these compounds, the polymerizable composition can be cured to obtain a cured product (polythiourethane resin). The polythiourethane resin is a resin having a plurality of bonds represented by the following Formula A in a molecule:

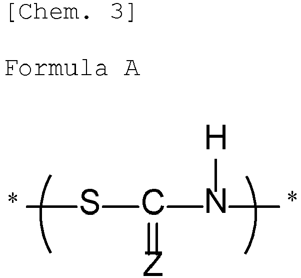

In Formula A, Z is an oxygen atom or a sulfur atom. The bond in which Z is an oxygen atom is formed by reacting the thiol group with the isocyanate group, and the bond in which Z is a sulfur atom is formed by reacting the thiol group with the isothiocyanate group. The "thiourethane bond" in the present invention and the present specification refers to a bond represented by Formula A. In Formula A, * indicates the position where the thiourethane bond is bonded to another adjacent structure. On the other hand, the urethane bond refers to a bond having an oxygen atom (O) at the position of the sulfur atom (S) in Formula A.

The polythiourethane resin obtained by polymerizing the polymerizable component contained in the polymerizable composition can be used as various optical materials. Examples of the optical material can include various lenses such as a spectacle lens, a telescope lens, a binocular lens, a microscope lens, an endoscope lens, and an imaging system lens of various cameras. In the present invention and the present specification, the "lens" encompasses a "lens substrate" in which one or more layers are optionally layered thereon.

For example, cast polymerization is preferable as a method for producing a cured product (also referred to as a "plastic lens") having a lens shape. In the cast polymerization, a polymerizable composition is injected into a cavity of a molding die having two molds facing each other with a predetermined gap and a cavity formed by closing the gap, and a polymerizable compound contained in the polymerizable composition is subjected to a curing treatment in the cavity, such that a cured product can be obtained. The curing treatment can be a heat treatment or light irradiation, and is preferably a heat treatment. For details of a molding die usable in cast polymerization, for example, paragraphs 0012 to 0014 and Fig. 1 of JP 2009-262480 A can be referred to. Note that the publication describes a molding die in which the gap between the two molds is closed with a gasket as a sealing member, but a tape can also be used as the sealing member.

In one aspect, the cast polymerization can be performed as follows. The polymerizable composition is injected into a molding die cavity from an injection port formed on a side surface of the molding die. After the injection, by polymerizing (curing reaction) the polymerizable component contained in the polymerizable composition by heating, the polymerizable composition can be cured to obtain a cured product having an internal shape of the cavity transferred thereon. A polymerization condition is not particularly limited, and can be appropriately set depending on the composition of the polymerizable composition or the like. As an example, a molding die having a polymerizable composition injected into a cavity can be heated at a heating temperature of 20 to 150°C for about 1 to 72 hours, but the polymerization condition is not limited thereto. In the present invention and the present specification, the heating temperature related to cast polymerization refers to a temperature of an atmosphere in which a molding die is disposed. In addition, it is possible to raise the temperature at an arbitrary temperature rising rate during heating, and to lower the temperature (cooling) at an arbitrary temperature falling rate. After completion of the polymerization (curing reaction), the cured product inside the cavity is released from the molding die. The cured product can be released from the molding die by removing the upper and lower molds forming the cavity and a gasket or a tape in an arbitrary order as usually performed in cast polymerization. The cured product released from the molding die can be used as an optical material after a post-treatment, if necessary, and can be used as, for example, various lenses (for example, a lens substrate). As an example, the cured product used as a lens substrate of a spectacle lens can be usually subjected to a post-process such as annealing, a dyeing treatment, a grinding process such as a rounding process, a polishing process, or a process of forming a coating layer such as a primer coating layer for improving impact resistance or a hard coating layer for improving surface hardness after releasing. Furthermore, various functional layers such as an antireflection layer and a water-repellent layer can be formed on the lens substrate. A known technique can be applied to any of these processes. In this way, a spectacle lens in which a lens substrate is the cured product can be obtained. Furthermore, by mounting the spectacle lens in a frame, spectacles including the spectacle lenses can be obtained.

The optical material can have excellent heat resistance. The optical material having excellent heat resistance has, for example, a small amount of deformation and/or deterioration of the optical material as the substrate even when the heat treatment is performed in a film forming process of forming one or more various functional films on the optical material, which is preferable. Examples of an index of the heat resistance can include a glass transition temperature (Tg). The glass transition temperature (Tg) in the present invention and the present specification refers to a glass transition temperature measured by a thermomechanical analysis (TMA) penetration method according to JIS K7196-2012. For a specific measurement method, Examples described below can be referred to. A high glass transition temperature is preferable from the viewpoint of heat resistance. In one aspect, the optical material can have a glass transition temperature of 80°C or higher, and can have a glass transition temperature of 80 to 130°C.

In addition, since the optical material is a cured product obtained from a polymerizable composition containing the various components, the optical material can have excellent heat resistance and a high refractive index, can have excellent heat resistance and a high Abbe number, and can have excellent heat resistance, a high refractive index, and a high Abbe number. In one aspect, a refractive index ne of the optical material can be higher than 1.63, and can be 1.64 or higher, 1.65 or higher, or 1.66 or higher. The refractive index ne of the optical material can be, for example, 1.70 or lower, 1.69 or lower, or 1.68 or lower, and may exceed the value exemplified here. In addition, in one aspect, an Abbe number vd of the optical material is preferably 28 or higher and more preferably 29 or higher. The Abbe number vd of the optical material can be, for example, 40 or lower or 38 or lower, and may exceed the value exemplified here.

### Examples

Hereinafter, the present invention will be described in more detail with reference to Examples, but the present invention is not limited to aspects indicated by Examples. The operations and evaluations described below were performed in an environment of an atmosphere at room temperature (about 20 to 25°C) under atmospheric pressure, unless otherwise specified.

### [Example 1]

To a 300 ml eggplant type flask (hereinafter, described as a "container"), 20.5 g of 5-(isocyanatomethyl)bicyclo[2.2.1]hept-2-ene as a non-aromatic isocyanate compound having an unsaturated aliphatic ring and 12.6 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 24.5 g of tolylene diisocyanate as an aromatic iso(thio)cyanate compound, 42.4 g of bis(mercaptomethyl)-3,6,9-trithiaundecane-1,11-dithiol as a polythiol compound, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 2]

To a 300 ml eggplant type flask (container), 17.0 g of 5-(isocyanatomethyl)bicyclo[2.2.1]hept-2-ene as a non-aromatic isocyanate compound having an unsaturated aliphatic ring and 9.9 g of 4-mercaptomethyl-1,8-dimercapto-3,6-dithiaoctane as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 29.0 g of tolylene diisocyanate as an aromatic iso(thio)cyanate compound, 44.1 g of 4-mercaptomethyl-1,8-dimercapto-3,6-dithiaoctane as a polythiol compound, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Example 3]

To a 300 ml eggplant type flask (container), 20.0 g of 5-(isocyanatomethyl)bicyclo[2.2.1]hept-2-ene as a non-aromatic isocyanate compound having an unsaturated aliphatic ring and 12.3 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 30.0 g of diphenylmethane diisocyanate as an aromatic iso(thio)cyanate compound, 37.7 g of bis(mercaptomethyl)-3,6,9-trithiaundecane-1,11-dithiol as a polythiol compound, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 1]

To a 300 ml eggplant type flask (container), 22.0 g of 5-(isocyanatomethyl)bicyclo[2.2.1]hept-2-ene as a non-aromatic isocyanate compound having an unsaturated aliphatic ring and 13.5 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent and 0.01 g of 2,2'-azobis-2,4-dimethylvaleronitrile as a first catalyst were added, the mixture in the container was heated to a heating temperature of 60°C, and the mixture was continuously stirred for 2 hours, thereby performing a preliminary reaction.

Thereafter, the mixture in the container was cooled to room temperature, 24.0 g of hexamethylene diisocyanate, 40.5 g of bis(mercaptomethyl)-3,6,9-trithiaundecane-1,11-dithiol as a polythiol compound, and 0.03 g of dimethyltin dichloride as a second catalyst were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Comparative Example 2]

To a 300 ml eggplant type flask (container), 14.1 g of allyl isothiocyanate, 27.8 g of tolylene diisocyanate as an aromatic iso(thio)cyanate compound, and 58.1 g of bis(mercaptomethyl)-3,6,9-trithiaundecane-1,11-dithiol as a polythiol compound were charged, 0.15 g of butoxyethyl acid phosphate (JP-506H, manufactured by JOHOKU CHEMICAL CO., LTD.) as a release agent, 0.01 g of 2,2'-azobis-2,4-dimethylvaleronitrile as a catalyst, and 0.01 g of dimethyltin dichloride were added, the pressure in the container was reduced to 130 Pa (1.0 Torr), and the mixture was stirred under reduced pressure for 30 minutes, thereby preparing a polymerizable composition.

The polymerizable composition was injected into a molding die for forming a lens through a polytetrafluoroethylene membrane filter having a pore diameter of 1.0 µm, and cast polymerization was performed at a temperature program from an initial temperature of 25°C to a final temperature of 125°C for 24 hours, thereby producing a plastic lens having a center thickness of 2 mm.

### [Evaluation method]

### (1) Glass transition temperature

Each of the plastic lenses of Examples and Comparative Examples was released from the molding die and then subjected to measurement of a glass transition temperature. The glass transition temperature was measured by a penetration method using a thermomechanical analyzer TMA8310 manufactured by Rigaku Corporation. A temperature rising rate during the measurement was 10 K/min, and an indenter having a diameter of 0.5 mm was used as an indenter for the penetration method.

### (2) Refractive index ne

A refractive index ne of each of the plastic lenses of Examples and Comparative Examples was measured by a precision refractometer KPR-2000 manufactured by Kalnew Optical Industrial Co., Ltd.

### (3) Abbe number νd

An Abbe number vd of each of the plastic lenses of Examples and Comparative Examples was measured by a precision refractometer KPR-2000 manufactured by Kalnew Optical Industrial Co., Ltd.

### Results for the above measurement are shown in Table 1.

**[Table 1]**

| | Glass transition temperature Tg (°C) | Refractive index ne | Abbe number νd |
|---|---|---|---|
| Example 1 | 125 | 1.67 | 30 |
| Example 2 | 102 | 1.67 | 30 |
| Example 3 | 99 | 1.67 | 30 |
| Comparative Example 1 | 75 | 1.63 | 38 |
| Comparative Example 2 | 55 | 1.67 | 30 |

Each of the plastic lenses of Examples 1 to 3 is a plastic lens produced from a polymerizable composition containing an aromatic iso(thio)cyanate compound as an iso(thio)cyanate compound and a non-aromatic iso(thio)cyanate compound having an unsaturated aliphatic ring. On the other hand, the polymerizable composition used for producing the plastic lenses of Comparative Examples 1 to 3 does not contain any one of the aromatic iso(thio)cyanate compound and the non-aromatic iso(thio)cyanate compound having an unsaturated aliphatic ring.

From the results shown in Table 1, it can be confirmed that each of the plastic lenses of Examples 1 to 3 has a higher glass transition temperature Tg than those of the plastic lenses of Comparative Examples 1 and 2, that is, has excellent heat resistance. As described above, the plastic lens having excellent heat resistance is suitable as a lens substrate for producing a spectacle lens formed by forming one or more functional films (for example, a hard coat, an antireflection film, and the like) thereon by a film forming method involving a heat treatment. Furthermore, from the results shown in Table 1, it can be confirmed that each of the plastic lenses of Examples 1 to 3 has excellent heat resistance, a high refractive index, and a high Abbe number.

Finally, the aspects described above will be summarized.

According to one aspect, there is provided a polymerizable composition for an optical material containing an aromatic iso(thio)cyanate compound, a non-aromatic iso(thio)cyanate compound having an unsaturated aliphatic ring, and a polythiol compound.

The polymerizable composition can be used for producing an optical material having excellent heat resistance.

In one aspect, the unsaturated aliphatic ring can be an unsaturated bicyclic aliphatic ring.

In one aspect, an unsaturated bond contained in the unsaturated aliphatic ring can be a carbon-carbon double bond.

In one aspect, the unsaturated aliphatic ring can be a norbornene ring.

In one aspect, the non-aromatic iso(thio)cyanate compound can be a monofunctional iso(thio)cyanate compound.

In one aspect, the non-aromatic iso(thio)cyanate compound can be 5-(isocyanatomethyl)bicyclo[2.2.1]hept-2-ene.

In one aspect, the aromatic iso(thio)cyanate compound can be a bi- or higher functional iso(thio)cyanate compound.

In one aspect, the polythiol compound can be a tri- or higher functional polythiol compound.

According to one aspect, there is provided an optical material that is a cured product obtained by curing the polymerizable composition for an optical material.

The optical material can have excellent heat resistance.

In one aspect, the optical material can be a lens.

In one aspect, the lens can be a spectacle lens.

According to one aspect, there is provided a method for producing an optical material, the method including curing the polymerizable composition for an optical material by a curing treatment.

The various aspects described in the present specification can be combined in two or more in any combination.

The embodiment disclosed here is exemplary in all respects, and it should be considered that the embodiment is not restrictive. The scope of the present invention is defined not by the above description but by claims, and intends to include all modifications within meaning and a scope equal to claims.

### Industrial Applicability

One aspect of the present invention is useful in the field of producing various optical materials such as a spectacle lens.

## Claims

1. A polymerizable composition for an optical material, comprising:
an aromatic iso(thio)cyanate compound;
a non-aromatic iso(thio)cyanate compound having an unsaturated aliphatic ring; and
a polythiol compound.

2. The polymerizable composition for an optical material according to claim 1, wherein the unsaturated aliphatic ring is an unsaturated bicyclic aliphatic ring.

3. The polymerizable composition for an optical material according to claim 1 or 2, wherein an unsaturated bond contained in the unsaturated aliphatic ring is a carbon-carbon double bond.

4. The polymerizable composition for an optical material according to any one of claims 1 to 3, wherein the unsaturated aliphatic ring is a norbornene ring.

5. The polymerizable composition for an optical material according to any one of claims 1 to 4, wherein the non-aromatic iso(thio)cyanate compound is a monofunctional iso(thio)cyanate compound.

6. The polymerizable composition for an optical material according to any one of claims 1 to 5, wherein the non-aromatic iso(thio)cyanate compound is 5-(isocyanatomethyl)bicyclo[2.2.1]hept-2-ene.

7. The polymerizable composition for an optical material according to any one of claims 1 to 6, wherein the aromatic iso(thio)cyanate compound is a bi- or higher functional iso(thio)cyanate compound.

8. The polymerizable composition for an optical material according to any one of claims 1 to 7, wherein the polythiol compound is a tri- or higher functional polythiol compound.

9. An optical material that is a cured product obtained by curing the polymerizable composition for an optical material according to any one of claims 1 to 8.

10. The optical material according to claim 9, wherein the optical material is a lens.

11. The optical material according to claim 10, wherein the lens is a spectacle lens.

12. A method for producing an optical material, the method comprising curing the polymerizable composition for an optical material according to any one of claims 1 to 8 by a curing treatment.
